# EUROPÄISCHE PATENTSCHRIFT

(11) **EP 3 278 059 B1**
(45) Veröffentlichungstag und Bekanntmachung des Hinweises auf die Patenterteilung: **13.02.2019**
(21) Anmeldenummer: 16716155.3
(22) Anmeldetag: 10.03.2016
(51) Int. Cl.: G01B 11/26, G01B 11/27, G01B 11/00, G01B 11/14, G01B 5/25

(54) **SYSTEM UND VERFAHREN ZUM ERMITTELN DER RELATIVEN VERLAGERUNG ZWEIER KÖRPER ZUEINANDER**
SYSTEM AND METHOD FOR DETERMINING THE DISPLACEMENT OF TWO BODIES RELATIVE TO EACH OTHER
SYSTÈME ET PROCÉDÉ POUR DÉTERMINER LE DÉPLACEMENT RELATIF DE DEUX CORPS L'UN PAR RAPPORT À L'AUTRE

(30) Priorität: 31.03.2015 DE 102015205830
(43) Veröffentlichungstag der Anmeldung: 07.02.2018
(73) Patentinhaber: Prüftechnik Dieter Busch AG, 85737 Ismaning (DE)
(72) Erfinder: LYSEN, Heinrich, 85748 Garching (DE)
(86) Internationale Anmeldenummer: PCT/DE2016/200131
(87) Internationale Veröffentlichungsnummer: WO 2016/155720

(56) Entgegenhaltungen:
- WO-A1-2010/042039
- DE-A1- 3 335 336
- DE-A1- 3 814 466
- US-A- 2 347 702

## Beschreibung

### Hintergrund der Erfindung

Die vorliegende Erfindung betrifft ein System und ein Verfahren zum Ermitteln der relativen Verlagerung zweier Körper zueinander.

Ein System und ein Verfahren der eingangs genannten Art sind z.B. aus der WO 2010/042039 A1 bekannt. Bei dem bekannten System wird ein an einem ersten drehbaren Körper angebrachtes geometrisches Muster von einer an einem zweiten drehbaren Körper angebrachten Detektoreinheit in mehreren Drehstellungen des ersten Körpers und/oder zweiten Körpers erfasst. Ferner wird in diesen Drehstellungen auch ein an dem zweiten drehbaren Körper angebrachtes weiteres geometrisches Muster von einer weiteren an dem ersten drehbaren Körper angebrachten Detektoreinheit erfasst. Auf der Grundlage der sich mit der Veränderung der Drehstellungen einhergehenden Verschiebungen der erfassten geometrischen Muster wird dann bei der aus der WO 2010/042039 A1 bekannten technischen Lehre die Lage der Drehachse des ersten drehbaren Körpers relativ zur Drehachse des zweiten drehbaren Körpers ermittelt, wobei es sich bei den beiden Einrichtungen bzw. Körpern insbesondere um miteinander fluchtend auszurichtende Wellen handeln kann. Jede der Detektoreinheiten weist eine Kamera zum Erfassen der geometrischen Muster auf. Zur genauen Ermittlung der relativen Lage der Drehachsen zueinander sind bei der bekannten Lösung die Muster möglichst präzise bzw. scharf auf der Sensorfläche des Bildsensors der jeweiligen Kamera abzubilden. Hierfür müssen die Kameras möglichst präzise auf die geometrischen Muster fokussiert werden. Die Einstellung einer erwünschten Fokussierung erweist sich in der Praxis als aufwendig und fehleranfällig, da schon geringe Beschleunigungs-und Gravitations-kräfte wie sie z.B. beim Umschlag der Detektoreinheiten auftreten eine unerwünschte Verlagerung des Objektivs mit sich bringen können, was wiederum zu Ungenauigkeiten bei der Ermittlung der Lage der Drehachsen zueinander führt. Derartige Schwierigkeiten mit der Fokussierung ergeben sich z.B. auch bei der aus der DE 33 35 336 A1 bekannten Lösung. Aus der DE 33 35 336 A1 sind ein Verfahren und eine Vorrichtung zum statischen Ausrichten von Wellen und zum Überwachen der Wellenausrichtung bekannt.

### Zugrundeliegende Aufgabe

Es ist Aufgabe der Erfindung, ein System und ein Verfahren anzugeben, die eine präzise Ermittlung der relativen Verlagerung zweier Körper zueinander ermöglichen.

### Erfindungsgemäße Lösung

Diese Aufgabe wird erfindungsgemäß mit einem System mit den Merkmalen des Anspruchs 1 und mit einem Verfahren mit den Merkmalen des Anspruchs 7 gelöst.

Das erfindungsgemäße System umfasst eine erste Kamera, eine zweite Kamera, eine erste Leuchte und eine zweite Leuchte.

Sowohl die erste Kamera als auch die zweite Kamera umfasst jeweils ein Objektiv und einen Bildsensor mit einer Sensorfläche.

Sowohl die erste Leuchte als auch die zweite Leuchte umfasst jeweils wenigstens eine Lichtquelle und eine Linsenvorrichtung mit positiver Brechkraft zum Bereitstellen eines divergenten Lichtbüschels bzw. eines divergierenden Leuchtenlichts bzw. eines Leuchtenlichts durch Umlenken von der Lichtquelle abgestrahlten Lichts. Die Linsenvorrichtung mit positiver Brechkraft kann insbesondere einen Kollimator aufweisen.

Sowohl die Sensorfläche des Bildsensors der ersten Kamera als auch die Sensorfläche des Bildsensors der zweiten Kamera weist ein Koordinatensystem zur Positionserfassung des virtuellen Bilds auf der Sensorfläche auf.

Das erfindungsgemäße System zum Ermitteln der relativen Verlagerung zweier Körper zueinander zeichnet sich insbesondere dadurch aus, dass bei jeder der Leuchten der Abstand der Lichtquelle zu der Linsenvorrichtung bzw. zum Kollimator der Linsenvorrichtung kleiner ist als die Brennweite der Linsenvorrichtung bzw. der Linsenvorrichtung des Kollimators. Dadurch ist es möglich ein virtuelles Bild der Lichtquelle der jeweiligen Leuchte zu erzeugen. Durch das Objektiv der ersten Kamera ist nun das virtuelle Bild der Lichtquelle der zweiten Leuchte auf der Sensorfläche der ersten Kamera schärfer abbildbar, weil es weiter entfernt erscheint.

Und durch das Objektiv der zweiten Kamera ist nun das virtuelle Bild der Lichtquelle der ersten Leuchte auf der Sensorfläche des Bildsensors der zweiten Kamera schärfer abbildbar, weil es weiter entfernt erscheint. Insbesondere wenn die Bildweite des virtuellen Bildes größer ist als die Brennweite des Objektivs.

Dadurch, dass mittels des erfindungsgemäßen Systems die virtuellen Bilder der Lichtquellen der Leuchten auf den Sensorflächen abbildbar sind, kann zum Beispiel auf der Grundlage von Koordinaten der Positionen der virtuellen Bilder auf den Sensorflächen die Verlagerung der beiden Körper zueinander sehr präzise ermittelt werden. Bei den Koordinaten handelt es sich hierbei - sofern es sich bei einer Ausführungsform der Körper um Körper handelt, die jeweils um eine Drehachse drehbar sind - um die Koordinaten der Positionen der virtuellen Bilder auf den Sensorflächen, die in wenigstens fünf unterschiedlichen Drehstellungen wenigstens einer der Körper bzw. Einrichtungen um die Drehachse oder in wenigstens drei unterschiedlichen Drehstellungen jeder der beiden Körper bzw. Einrichtungen um die Drehachse erfasst werden, wobei auf der Grundlage dieser Koordinaten oder auf der Grundlage dieser Koordinaten und der Drehwinkel dieser Drehstellungen, die sich jeweils von einer vorgegebenen Referenz-Drehstellung des ersten Körpers und zweiten Körpers bemessen, die Verlagerung der beiden Körper zueinander sehr präzise ermittelt werden kann. Dies ist eine Folge des Umstands, dass aufgrund der Bildweite des jeweiligen virtuellen Bilds, deren Betrag je nach Wahl der Gegenstandsweite der Lichtquelle und der Brennweite der Linsenvorrichtung deutlich größer sein kann als die Gegenstandweite, eine genügend hohe Schärfentiefe bei einem gegebenen Abstand zwischen der jeweiligen Lichtquelle und dem Objektiv der Kamera bereitgestellt werden kann.

Die erste Kamera ist an dem ersten Körper der beiden Körper und die zweite Leuchte ist an dem zweiten Körper der beiden Körper derart anbringbar, dass durch das Objektiv der ersten Kamera ein virtuelles Bild der Lichtquelle der zweiten Leuchte auf der Sensorfläche des Bildsensors der ersten Kamera wenigstens teilweise abbildbar ist bzw.
die erste Kamera ist an dem ersten Körper der beiden Körper anbringbar und die zweite Leuchte ist an dem zweiten Körper der beiden Körper anbringbar, wobei im angebrachten Zustand durch das Objektiv der ersten Kamera ein virtuelles Bild der Lichtquelle der zweiten Leuchte auf der Sensorfläche des Bildsensors der ersten Kamera wenigstens teilweise abbildbar ist.

Die zweite Kamera ist an dem zweiten Körper und die erste Leuchte ist an dem ersten Körper derart anbringbar, dass durch das Objektiv der zweiten Kamera ein virtuelles Bild der Lichtquelle der ersten Leuchte auf der Sensorfläche des Bildsensors der zweiten Kamera wenigstens teilweise abbildbar ist
bzw.
die zweite Kamera ist an dem zweiten Körper der beiden Körper anbringbar und die erste Leuchte ist an dem ersten Körper der beiden Körper anbringbar, wobei im angebrachten Zustand durch das Objektiv der zweiten Kamera ein virtuelles Bild der Lichtquelle der ersten Leuchte auf der Sensorfläche des Bildsensors der zweiten Kamera wenigstens teilweise abbildbar ist.

Wenn von unterschiedlichen Drehstellungen einer der Körper die Rede ist, ist damit selbstverständlich zu verstehen, dass sich die Drehstellungen durch den Drehwinkel, der sich von einer vorgegebenen Referenz-Drehstellung dieses Körpers bemisst, voneinander unterscheiden.

Selbstverständlich muss es sich bei den Körpern nicht zwingend um solche Körper handeln, die um eine Drehachse drehbar sind.

Selbst wenn z.B. infolge baulicher Gegebenheiten ein bestimmter Abstand zwischen dem Objektiv der Kamera und der Lichtquelle bzw. der Leuchte nicht überschritten werden kann, kann jedoch mittels einer großen Bildweite des virtuellen Bilds für die Abbildung derselben auf der jeweiligen Sensorfläche eine hohe Schärfentiefe realisiert werden, da die Schärfentiefe mit zunehmendem Abstand des jeweiligen virtuellen Bildes von dem Objektiv der Kamera zunimmt, *wenn die Kamera auf große Abstände fokussiert ist.* Diese hohe Schärfentiefe ermöglicht vorteilhaft eine präzise bzw. scharfe Abbildung des virtuellen Bilds der jeweiligen Lichtquelle auf der jeweiligen Sensorfläche, was wiederum eine sehr genaue Erfassung der Koordinaten des virtuellen Bilds der jeweiligen Lichtquelle auf der jeweiligen Sensorfläche ermöglicht. Insbesondere bringt die hohe Schärfentiefe den Vorteil mit sich, dass eine z.B. infolge von mechanischen Verrückungen bzw. Wacklern hervorgerufene Verstellung der Fokussierung der Kamera keinen wesentlichen bzw. merklichen Einfluss auf die Genauigkeit bei der Ermittlung der relativen Verlagerung der beiden Körper zueinander haben muss, und zwar ganz im Unterschied zu der aus der WO 2010/042039 A1 bekannten Lösung, bei welcher eine Verstellung der Fokussierung der jeweiligen Kamera zu großen bzw. wesentlichen Ungenauigkeiten bei der Ermittlung der relativen Verlagerung der Körper zueinander führen kann. Bei der aus der WO 2010/042039 A1 bekannten Lösung wird die Lage der Drehachsen zueinander auf der Grundlage der Positionen der geometrischen Muster auf den Sensorflächen der Kamera-Bildsensoren ermittelt, und zwar auf der Grundlage der Positionen dieser Muster in mehreren Drehstellungen der drehbaren Körper, insbesondere Wellen.

Insgesamt betrachtet ist mit dem erfindungsgemäßen System aufgrund des oben Dargelegten eine präzise Ermittlung der relativen Verlagerung von zwei Körpern zueinander möglich.

Das mit dem erfindungsgemäßen System bereitgestellte Kameraprinzip zeichnet sich dadurch aus, dass der Messbereich größer ist als die Sensorik bzw. der jeweilige Bildsensor.

Vorzugsweise ist der erste Körper ein drehbarer Körper, der um eine Drehachse des ersten Körpers drehbar ist, und der zweite Körper ist vorzugsweise ein drehbarer Körper, der um eine Drehachse des zweiten Körpers drehbar ist.

Vorzugsweise ist die erste Kamera an dem ersten Körper derart drehfest anbringbar, dass die Sensorfläche des Bildsensors bzw. die ebene Sensorfläche des Bildsensors der ersten Kamera rechtwinkelig bzw. im Wesentlichen rechtwinkelig zur Drehachse des ersten Körpers ausgerichtet ist. Auch die zweite Kamera ist an dem zweiten Körper vorzugsweise derart drehfest anbringbar, dass die Sensorfläche des Bildsensors bzw. die ebene Sensorfläche des Bildsensors der zweiten Kamera rechtwinkelig bzw. im Wesentlichen rechtwinkelig zur Drehachse des zweiten Körpers ausgerichtet ist. Entsprechendes ist vorzugsweise auch für die Hautebene bzw. Hautebenen der Linsenvorrichtungen der Leuchten vorgesehen.

Bei den Bildsensoren der Kameras kann es sich um beliebige Bildsensoren handeln. Insbesondere ist jeder Bildsensor vorzugsweise dazu eingerichtet die Koordinaten der Position des virtuellen Bilds der jeweiligen Lichtquelle bzw. Licht aussendenden Lichtquelle zu erfassen und auszugeben. Vorzugsweise können diese Koordinaten z.B. in Form analoger oder digitaler Signale über einen Signalübertragungsweg -auch kabellos- von dem jeweiligen Bildsensor an eine Auswerteeinheit zur Auswertung übertragen werden. Bei der Auswerteinheit bzw. Auswerteinrichtung kann es sich z.B. um einen Computer z.B. in Form eines Laptops oder eines Tablets handeln. Alternativ kann auch die Auswerteinheit dazu eingerichtet sein, die Koordinaten der Position des virtuellen Bilds der jeweiligen Lichtquelle bzw. Licht aussendenden Lichtquelle zu erfassen bzw. zu erfassen und auszugeben, wobei die Auswerteeinheit hierfür Daten bzw. Signale des jeweiligen Bildsensors über einen Datenübertragungsweg bzw. Signalübertragungsweg von dem jeweiligen Bildsensors empfangen kann.

Bei dem Bildsensor kann es sich insbesondere um einen PSD-Sensor (PSD ist eine Abkürzung für "Position Sensitive Device") handeln.

Jede der Lichtquellen der beiden Leuchten kann eine oder mehrere Leuchtdioden umfassen bzw. jede der Lichtquellen der beiden Leuchten kann in Form einer Leuchtdiode ausgebildet sein, wobei die Leuchtdiode besonders vorteilhaft eine Leuchtdiode sein kann, die Licht durch eine sehr kleine Blendenöffnung mit einem Durchmesser innerhalb eines Bereichs von 25 µm bis 150 µm aussenden kann, so dass ein virtuelles Bild der Lichtquelle mit einer nur sehr kleinen flächigen Ausdehnung auf der jeweiligen Sensorfläche bereitgestellt werden kann, dem vorteilhaft ohne großen rechnerischen Aufwand ein Referenzpunkt zur Positionserfassung zugeordnet werden kann.

Wenn der erste Körper ein drehbarer Körper ist, der um eine Drehachse des ersten Körpers drehbar ist, und wenn der zweite Körper ein drehbarer Körper ist, der um eine Drehachse des zweiten Körpers drehbar ist, ist bei einer bevorzugten Ausführungsform jedes Koordinatensystem ein zweidimensionales Koordinatensystem und das erfindungsgemäße System umfasst eine Auswerteeinheit, die dazu eingerichtet ist, auf der Grundlage bzw. mittels der Koordinaten der Positionen der virtuellen Bilder auf den Sensorflächen, die in wenigstens fünf unterschiedlichen Drehstellungen wenigstens einer der Körper um die Drehachse bzw. um die Drehachse des Körpers oder in wenigstens drei unterschiedlichen Drehstellungen jeder der beiden Körper um die Drehachse erfasst wurden, die relative Verlagerung der beiden Körper zueinander zu ermitteln bzw. zu bestimmen. Vorzugsweise ist hierfür die Auswerteeinheit über einen Signalübertragungsweg bzw. Datenübertragungsweg mit dem jeweiligen Bildsensor verbunden oder ist - z.B. in Form eines programmierbaren elektronischen Bausteins - Teil des Bildsensors, wobei im ersten Fall, die Koordinaten der Positionen des virtuellen Bilds der jeweiligen Lichtquelle bzw. Licht aussendenden Lichtquelle von dem jeweiligen Bildsensor erfasst und der Auswerteeinheit über den
Signalübertragungsweg bzw. Datenübertragungsweg z.B. in Form analoger oder digitaler Signale - auch kabellos- zugeführt bzw. an diese ausgegeben werden können. Bei der Auswerteinheit bzw. Auswerteinrichtung kann es sich z.B. um einen Computer z.B. in Form eines Laptops oder eines Tablets handeln, dem die Koordinaten der Position des virtuellen Bilds auf der jeweiligen Sensorfläche - insbesondere über eine geeignete Schnittstelle - zugeführt werden können. Bei dieser bevorzugten Ausführungsform ist das Koordinatensystem jeder Sensorfläche bzw. jedes Bildsensors ein zweidimensionales Koordinatensystem, das Positionen des jeweiligen virtuellen Bildes also mit zwei Koordinatenwerten bzw. Koordinaten (also z.B. X-Wert und Y-Wert bei einem kartesischen Koordinatensystem) angibt bzw. erfasst. Für die Erfassung der Lagen der Drehachsen zueinander sind dann die Drehwinkel bzw. Drehwinkel-Werte der jeweiligen Drehstellungen nicht erforderlich.

Alternativ kann anstelle des Bildsensors die Auswerteinheit dazu eingerichtet sein, die Koordinaten der Position des virtuellen Bilds der jeweiligen Lichtquelle bzw. Licht aussendenden Lichtquelle zu erfassen bzw. zu erfassen und auszugeben, wobei die Auswerteeinheit hierfür Daten bzw. Signale des jeweiligen Bildsensors über einen Datenübertragungsweg bzw. Signalübertragungsweg von dem jeweiligen Bildsensors empfangen kann.

Wenn der erste Körper ein drehbarer Körper ist, der um eine Drehachse des ersten Körpers drehbar ist, und wenn der der zweite Körper ein drehbarer Körper ist, der um eine Drehachse des zweiten Körpers drehbar ist, umfasst das System bei einer weiteren vorteilhaften Ausführungsform eine Auswerteeinheit, die dazu eingerichtet ist, auf der Grundlage der Koordinaten der Positionen der virtuellen Bilder auf den Sensorflächen, die in wenigstens fünf unterschiedlichen Drehstellungen wenigstens einer der Körper um die Drehachse oder in wenigstens drei unterschiedlichen Drehstellungen jeder der beiden Körper um die Drehachse erfasst wurden, und auf der Grundlage der Drehwinkel dieser Drehstellungen, die relative Verlagerung der beiden Körper zueinander zu ermitteln. Im Unterschied zu der obigen bevorzugten Ausführungsform muss bei dieser weiteren vorteilhaften Ausführungsform das Koordinatensystem nicht zwingend ein zweidimensionales Koordinatensystem sein, da neben den Koordinaten der Positionen der virtuellen Bilder auch die Drehwinkel der Drehstellungen bzw. die Drehwinkel-Werte dieser Drehstellungen für die Lagebestimmung der Drehachsen bzw. für die Bestimmung der relativen Verlagerung der Körper zueinander herangezogen werden, so dass also auch ein eindimensionales Koordinatensystem ausreicht.

Auch bei der obigen weiteren vorteilhaften Ausführungsform ist die Auswerteeinheit vorzugsweise über einen Signalübertragungsweg bzw. Datenübertragungsweg mit dem jeweiligen Bildsensor verbunden oder ist - z.B. in Form eines programmierbaren elektronischen Bausteins - Teil des Bildsensors, wobei im ersten Fall, die Koordinaten der Positionen des virtuellen Bilds der jeweiligen Lichtquelle bzw. Licht aussendenden Lichtquelle von dem jeweiligen Bildsensor erfasst und der Auswerteeinheit über den Signalübertragungsweg z.B. in Form analoger oder digitaler Signale - auch kabelloszugeführt bzw. an diese ausgegeben werden können. Bei der Auswerteinheit bzw. Auswerteinrichtung kann es sich z.B. um einen Computer z.B. in Form eines Laptops oder eines Tablets handeln, dem die Koordinaten der Position des virtuellen Bilds auf der jeweiligen Sensorfläche - insbesondere über eine geeignete Schnittstelle - zugeführt werden können. Auch hier kann alternativ anstelle des Bildsensors die Auswerteinheit dazu eingerichtet sein, die Koordinaten der Position des virtuellen Bilds der jeweiligen Lichtquelle bzw. Licht aussendenden Lichtquelle zu erfassen bzw. zu erfassen und auszugeben, wobei die Auswerteeinheit hierfür entsprechende bzw. geeignete Daten bzw. Signale des jeweiligen Bildsensors über einen Datenübertragungsweg bzw. Signalübertragungsweg von dem jeweiligen Bildsensors empfangen kann.

Die Drehwinkel der Drehstellungen bzw. die Drehwinkel-Werte dieser Drehstellungen bemessen sich jeweils von einer Referenz-Drehstellung des jeweiligen Körpers, also ein Drehwinkel bzw. Drehwinkel-Wert einer Drehstellung des ersten Körpers bemisst sich von einer Referenz-Drehstellung des ersten Körpers und ein Drehwinkel bzw. Drehwinkel-Wert einer Drehstellung des zweiten Körpers bemisst sich von einer Referenz-Drehstellung des zweiten Körpers.

Bei einer praktischen Ausführungsform umfasst jeder Bildsensor einen Zeilensensor, wobei die Sensorfläche jedes Zeilensensors ein eindimensionales Koordinatensystem mit einer zu der Längsachse des Zeilensensors parallelen Koordinatenachse aufweist, wobei sowohl die erste Kamera als auch die zweite Kamera einen Astigmatismus aufweist bzw. wobei sowohl das Objektiv der ersten Kamera als auch das Objektiv der zweiten Kamera einen Astigmatismus aufweist, der ein virtuelles Bild der jeweiligen Lichtquelle mit wenigstens einer Brennlinie erzeugen kann, wobei auf jeder Sensorfläche ein Abschnitt der Brennlinie abbildbar ist, die winkelig, vorzugsweise rechtwinkelig zu der Koordinatenachse orientiert ist.

Der Astigmatismus kann insbesondere in jeder Kamera eingebaut sein.

Die Auswerteeinheit ist vorzugsweise dazu eingerichtet, zum Ermitteln der relativen Verlagerung der Körper zueinander als Koordinaten jeweils die Koordinaten des abgebildeten Abschnitts der Brennlinie in dem eindimensionalen Koordinatensystem zu verwenden.

Wenn der erste Körper ein drehbarer Körper ist, der um eine Drehachse des ersten Körpers drehbar ist, und wenn der der zweite Körper ein drehbarer Körper ist, der um eine Drehachse des zweiten Körpers drehbar ist, kann sich diese praktische Ausführungsform vorteilhaft den Umstand zu Nutze machen, dass für die Ermittlung der relativen Verlagerung der beiden Körper zueinander jeweils der Koordinatenwert bzw. die Koordinate einer einzigen Koordinatenachse - also der Koordinatenachse des eindimensionalen Koordinatensystems - ausreicht, sofern für die Ermittlung der relativen Verlagerung der beiden Körper neben den Koordinaten der Positionen der virtuellen Bilder in dem eindimensionalen Koordinatensystem auch die Drehwinkel bzw. Drehwinkel-Werte der unterschiedlichen Drehstellungen herangezogen werden (vgl. auch die Ausführungen zu der obigen vorteilhaften Ausführungsform). Daher kann mittels Bildsensoren - die jeweils lediglich einen kostengünstig erhältlichen Zeilensensor umfassen - in Verbindung mit dem Astigmatismus jeder Kamera ein kostengünstiges System bereitgestellt werden. Bei dieser praktischen Ausführungsform sind für die Ermittlung der relativen Verlagerung der beiden Körper zueinander neben den Drehwinkeln der Drehstellungen lediglich die Koordinaten des abgebildeten Abschnitts der jeweiligen Brennlinien auf der jeweiligen Sensorfläche, die in den Drehstellungen erfasst werden, erforderlich. Dies setzt natürlich voraus, dass das System derart drehfest an dem ersten und zweiten Körper anbringbar ist, dass in jeder der unterschiedlichen Drehstellungen ein Abschnitt der jeweiligen Brennlinie auf jeder der Sensorflächen abbildbar ist.

Besonders bevorzugt sind die Längsachsen der beiden Zeilensensoren parallel zueinander ausgerichtet, so dass also die Koordinatenachse der Sensorfläche des Zeilensensors der ersten Kamera parallel zur Koordinatenachse der Sensorfläche des Zeilensensors der zweiten Kamera ausgerichtet bzw. orientiert ist. Durch diese parallele Ausrichtung sind die Koordinaten der ersten und zweiten Kamera vorteilhaft unmittelbar miteinander vergleichbar, und zwar ohne aufwendige Umrechnungen vornehmen zu müssen.

Vorzugsweise liegt die Bildweite des virtuellen Bilds der Lichtquelle der ersten als auch der zweiten Leuchte - wobei die virtuellen Bilder von der Linsenvorrichtung der ersten bzw. zweiten Leuchte erzeugt werden - innerhalb eines Bereichs von -400 Millimetern bis -100 Millimetern. Mit einer derart dem Betrage nach großen Bildweite, die durch geeignete Wahl der Gegenstandsweite der Lichtquelle und der Brennweite der Linsenvorrichtung realisiert werden kann, kann vorteilhaft eine sehr hohe Schärfentiefe bei einem gegebenen Abstand zwischen der jeweiligen Lichtquelle und dem Objektiv der Kamera bereitgestellt werden, die eine sehr präzise Ermittlung bzw. Messung der relativen Verlagerung der beiden Körper zueinander ermöglicht, selbst wenn z.B. infolge baulicher Gegebenheiten ein bestimmter Abstand zwischen dem Objektiv der jeweiligen Kamera und der jeweiligen Lichtquelle bzw. Leuchte nicht überschritten werden kann. Eine typische in der Praxis gewählte Bildweite beträgt -350 mm.

Das erfindungsgemäße Verfahren zum Ermitteln der relativen Verlagerung zweier Körper zueinander, wobei jeder Körper um eine Drehachse drehbar ist, umfasst die folgenden Schritte:
(A) Bereitstellen eines erfindungsgemäßen Systems, wobei die erste Kamera an dem ersten Körper und die zweite Leuchte an dem zweiten Körper drehfest anbringbar sind, wobei die zweite Kamera an dem zweiten Körper und die erste Leuchte an dem ersten Körper drehfest anbringbar sind,
(B) Drehfestes Anbringen der ersten Kamera an dem ersten Körper und der zweiten Leuchte an dem zweiten Körper, wobei die erste Kamera und die zweite Leuchte derart drehfest angebracht werden, dass durch das Objektiv der ersten Kamera ein virtuelles Bild der Lichtquelle der zweiten Leuchte auf der Sensorfläche des Bildsensors der ersten Kamera wenigstens teilweise oder zur Gänze abbildbar ist, und
(C) Drehfestes Anbringen der zweiten Kamera an dem zweiten Körper und der ersten Leuchte an dem ersten Körper, wobei die zweite Kamera und die erste Leuchte derart drehfest angebracht werden, dass durch das Objektiv der zweiten Kamera ein virtuelles Bild der Lichtquelle der ersten Leuchte auf der Sensorfläche des Bildsensors der zweiten Kamera wenigstens teilweise oder zur Gänze abbildbar ist,
(D) Aktivieren sowohl der ersten als auch der zweiten Leuchte,
(E) Erfassen der Koordinaten der Positionen der virtuellen Bilder der Lichtquellen der Leuchten auf den Sensorflächen in wenigstens fünf unterschiedlichen Drehstellungen wenigstens eines Körpers um die Drehachse oder in wenigstens drei unterschiedlichen Drehstellungen jeder der beiden Körper um die Drehachse, und
(F) Ermitteln der relativen Verlagerung der beiden Körper zueinander auf der Grundlage der in Schritt (E) erfassten Koordinaten oder auf der Grundlage der in Schritt (E) erfassten Koordinaten und auf der Grundlage der Drehwinkel bzw. Drehwinkel-Werte der Drehstellungen (vgl. hierzu auch entsprechende obige Ausführungen bei der bevorzugten Ausführungsform und der weiteren voreilhaften Ausführungsform).

Aus den bereits oben in Bezug auf das erfindungsgemäße System dargelegten Gründen kann durch das erfindungsgemäße Verfahrens, welches mittes des erfindungsgemäßen Systems durchgeführt werden kann, eine präzise Ermittlung der relativen Verlagerung der beiden Körper zueinander realisiert werden.

Durch die Benennung der Schritte A bis F wird selbstverständlich keine Bindung an eine zeitliche Reihenfolge verfolgt. Die Buchstaben dienen lediglich der Benennung bzw. Namensgebung der Schritte. So werden die Schritte B und C nach Schritt A durchgeführt, wobei jedoch Schritt B nach Schritt C oder Schritt C nach Schritt B durchgeführt werden kann. Insbesondere können die Schritte B und C auch zur Gänze oder zeitweise bzw. während wenigstens eines Zeitintervalls zeitgleich durchgeführt werden.

Das Aktivieren bzw. Einschalten der Leuchten gemäß Schritt D, welches dazu führt, dass die Lichtquellen der Leuchten eingeschaltet bzw. aktiviert werden und Licht emittieren, wird vorzugsweise nach den Schritten A, B und C vorgenommen. Schritt E erfolgt nach Schritt D um zu gewährleisten, dass die virtuellen Bilder der Lichtquellen Bilder leuchtender Lichtquellen bzw. Licht aussendender Lichtquellen sind, deren Koordinaten in Schritt F sehr präzise erfasst werden können. In Schritt F, der vorzugsweise nach Schritt E erfolgt, aber ggf. auch schon während des Erfassens der Koordinaten gemäß Schritt E beginnen bzw. starten kann, erfolgt das Ermitteln der relativen Verlagerung der beiden Körper zueinander.

Der Schritt E setzt selbstverständlich voraus, dass in jeder Drehstellung ein virtuelles Bild der Lichtquelle der ersten Leuchte auf der Sensorfläche der zweiten Kamera wenigstens teilweise oder zur Gänze abbildbar ist und ein virtuelles Bild der Lichtquelle der zweiten Leuchte auf der Sensorfläche der ersten Kamera wenigstens teilweise oder zur Gänze abbildbar ist. Sofern diese Bedingungen erfüllt sind, sind die unterschiedlichen Drehstellungen im Übrigen selbstverständlich frei wählbar und können insbesondere vorteilhaft an bauliche Gegebenheiten angepasst werden.

Bei einer praktischen Ausführungsform des erfindungsgemäßen Verfahrens umfasst bei dem System jeder Bildsensor einen sich entlang einer Geraden erstreckenden Zeilensensor, wobei die Sensorfläche jedes Zeilensensors ein eindimensionales Koordinatensystem mit einer zu der Längsachse des Zeilensensors parallelen Koordinatenachse aufweist, wobei sowohl die erste Kamera als auch die zweite Kamera einen Astigmatismus aufweist, der ein virtuelles Bild der jeweiligen Lichtquelle mit wenigstens einer Brennlinie erzeugen kann, wobei auf jeder Sensorfläche ein Abschnitt der Brennlinie abbildbar ist, die winkelig, vorzugsweise rechtwinkelig zu der Koordinatenachse orientiert ist, wobei in Schritt (E) die Koordinaten der durch den abgebildeten Abschnitt der Brennlinie festgelegen Positionen der virtuellen Bilder in dem eindimensionalen Koordinatensystem erfasst werden, und wobei in Schritt (F) die relative Verlagerung der beiden Körper zueinander auf der Grundlage dieser Koordinaten und auf der Grundlage der Drehwinkel der Drehstellungen ermittelt wird. Wie bereits oben im Zusammenhang mit der praktischen Ausführungsform des erfindungsgemäßen Systems dargelegt, kann durch Vorsehen eines kostengünstig erhältlichen Zeilensensors in Verbindung mit dem vorgesehenen Astigmatismus an der ersten und zweiten Kamera bzw. am Objektiv der ersten und zweiten Kamera ein kostengünstiges System bereitgestellt werden und mithin auch ein kostengünstig durchführbares Verfahren zum Ermitteln der relativen Verlagerung zweier Körper zueinander.

Vorzugsweise liegt die Bildweite des virtuellen Bilds der Lichtquelle der ersten als auch der zweiten Leuchte - wobei die virtuellen Bilder von der Linsenvorrichtung der ersten bzw. zweiten Leuchte erzeugt werden - innerhalb eines Bereichs von -400 Millimetern bis -100 Millimetern bzw. vorzugsweise wird von der Linsenvorrichtung der ersten Leuchte ein virtuelles Bild der ersten Lichtquelle und von der Linsenvorrichtung der zweiten Leuchte ein virtuelles der zweiten Lichtquelle erzeugt, die jeweils eine Bildweite innerhalb eines Bereichs von -400 Millimetern bis -100 Millimetern aufweisen, einhergehend mit den bereits oben im Zusammenhang mit dem erfindungsgemäßen System dargelegten Vorteilen.

Selbstverständlich sind in Schritt E die Anzahl der vorgesehenen unterschiedlichen Drehstellungen nur minimale Anzahlen. Bevorzugt kann eine deutlich höhere Anzahl unterschiedlicher Drehstellungen des ersten und/oder zweiten Körpers vorgesehen werden, wodurch vorteilhaft die Genauigkeit bei der Ermittlung der relativen Verlagerung der beiden Körper zueinander wesentlich erhöht werden kann. Insbesondere können in Schritt E z.B. vorteilhaft die Koordinaten der Positionen der virtuellen Bilder der Lichtquellen der Leuchten auf den Sensorflächen in wenigstens zehn, zwanzig oder mehr unterschiedlichen Drehstellungen wenigstens eines Körpers um die Drehachse oder in wenigstens zehn, zwanzig oder mehr unterschiedlichen Drehstellungen jeder der beiden Körper um die Drehachse erfasst werden.

### Kurzbeschreibung der Zeichnungen

Nachfolgend werden Ausführungsbeispiele der Erfindung anhand der beigefügten Zeichnung näher erläutert. In der Zeichnung zeigen:
- Fig. 1: eine sehr schematische Schnittdarstellung eines ersten Ausführungsbeispiels eines erfindungsgemäßen Systems zusammen mit zwei drehbaren Körpern jeweils in Form einer Welle, und
- Fig.2: eine sehr schematische Schnittdarstellung eines zweiten Ausführungsbeispiels eines erfindungsgemäßen Systems zusammen mit den zwei drehbaren Körpern jeweils in Form einer Welle nach Fig. 1.

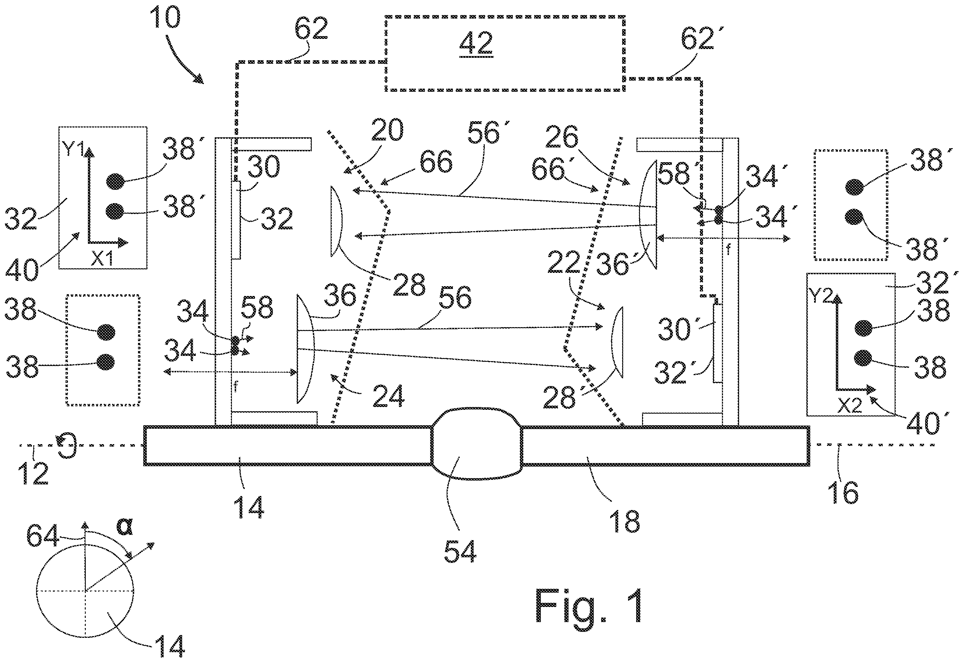

Das System 10 nach Fig. 1 ist ein System 10 zum Ermitteln der relativen Verlagerung zweier Körper 14, 18. Der erste Körper 14 ist in Form einer Welle 14 ausgebildet bzw. umfasst eine Welle 14. Auch der zweite Körper 18 ist in Form einer Welle 18 ausgebildet bzw. umfasst eine Welle 18.

Die beiden Wellen 14, 18 sind über eine Kupplung 54 miteinander verbunden, so dass eine Drehung der ersten Welle 14 auf die zweite Welle 18 übertragbar ist und umgekehrt.

Das System 10 umfasst eine erste Kamera 20, eine zweite Kamera 22, eine erste Leuchte 24 und eine zweite Leuchte 26. Die erste Kamera 20 und die erste Leuchte 24 sind in einem Gehäuse 66 aufgenommen. Auch die zweite Kamera 22 und die zweite Leuchte 26 sind in einem Gehäuse 66' aufgenommen

Die erste Kamera 20 umfasst ein Objektiv 28 und einen Bildsensor 30 mit einer Sensorfläche 32 und die zweite Kamera 22 umfasst ein Objektiv 28' und einen Bildsensor 30' mit einer Sensorfläche 32'.

Die erste Leuchte 24 umfasst zwei Lichtquellen 34 und eine Linsenvorrichtung 36 mit positiver Brechkraft zum Bereitstellen eines divergierenden Leuchtenlichts 56 durch Umlenken von den Lichtquellen 34 abgestrahlten Lichts 58.

Die zweite Leuchte 26 umfasst jeweils zwei Lichtquellen 34' und eine Linsenvorrichtung 36' mit positiver Brechkraft zum Bereitstellen eines divergierenden Leuchtenlichts 56' durch Umlenken von den Lichtquellen 34' abgestrahlten Lichts 58'.

Jede Lichtquelle 34, 34' umfasst eine Leuchtdiode zum Abstrahlen von Licht. Jede Linsenvorrichtung 36, 36' umfasst eine Sammellinse bzw. ist in Form einer Sammellinse ausgebildet. Das divergierende Leuchtenlicht 56, 56' tritt jeweils über eine hier nicht veranschaulichte Blende der jeweiligen Kamera 20, 22 und das jeweilige Objektiv 28, 28' teilweise auf die jeweilige Sensorfläche 32, 32'. So entsteht in der Nähe ein Messbereich in der Größe der jeweiligen Leuchte, in der Entfernung ein Messbereich in der Größe des aufgeweiteten Strahles bzw. divergierenden Leuchtenlichts 56, 56'. Die Auflösung ist auf die Größe des Messbereichs bezogen konstant. Mittes des erfindungsgemäßen Systems 10 sind hohe vorteilhafte Auflösungen innerhalb eines Bereichs von 0 bis 10m im Nahbereich und in der Entfernung möglich.

Bei jeder der Leuchten 24, 26 ist der Abstand der Lichtquellen 34, 34' zu der Linsenvorrichtung 36, 36' kleiner ist als die Brennweite f der Linsenvorrichtung 36, 36', also kleiner als der Abstand des Brennpunkts der Linsenvorrichtung 36, 36' zu der Linsenvorrichtung 36, 36'.

In der nach Fig.1 veranschaulichten Situation sind die erste Kamera 20 an dem ersten Körper 14 und die zweite Leuchte 26 an dem zweiten Körper 18 derart fest angebracht, dass durch das Objektiv 28 der ersten Kamera 20 virtuelle Bilder 38' der Lichtquellen 34' der zweiten Leuchte 26 auf der Sensorfläche 32 des Bildsensors 30 der ersten Kamera 20 abbildbar sind bzw. abgebildet werden können. Ferner sind in der nach Fig.1 veranschaulichten Situation die zweite Kamera 22 an dem zweiten Körper 18 und die erste Leuchte 24 an dem ersten Körper 14 derart fest anbringbar, dass durch das Objektiv 28' der zweiten Kamera 22 virtuelle Bilder 38 der Lichtquellen 34 der ersten Leuchte 24 auf der Sensorfläche 32' des Bildsensors 30' der zweiten Kamera 22 abbildbar sind bzw. abgebildet werden können.

In der Fig.1 sind die virtuellen Bilder 38, 38' jeweils links und rechts schematisch in Draufsicht gegenüber ihrer eigentlichen Lage um 90 Grad verdreht veranschaulicht, wobei die Darstellung mit dem gestrichelten Rechteck jeweils schematisch die Position der virtuellen Bilder 38, 38' bzw. der zugeordneten virtuellen Ebene zeigt. Die Darstellung mit dem durchgezogenen Rechteck hingegen veranschaulicht sehr schematisch die jeweilige Sensorfläche 32, 32' in Draufsicht, auf welcher die jeweiligen virtuellen Bilder 38, 38' abgebildet sind bzw. optisch abgebildet sind.

Sowohl die Sensorfläche 32 des Bildsensors 30 der ersten Kamera 20 als auch die Sensorfläche 32' des Bildsensors 30' der zweiten Kamera 22 weist ein zweidimensionales kartesisches Koordinatensystem 40 bzw. 40' zur Positionserfassung der virtuellen Bilder 38 bzw. 38' auf den Sensorflächen 32 bzw. 32' auf. Das zweidimensionale kartesische Koordinatensystem 40 der ersten Kamera 20 weist eine X1-Koordinatenachse und eine dazu rechtwinkelige Y1-Koordinatenachse auf. Das zweidimensionale kartesische Koordinatensystem 40' der zweiten Kamera 22 weist eine X2-Koordinatenachse und eine dazu rechtwinkelige Y2-Koordinatenachse auf.

Das System 10 nach Fig. 1 weist ferner eine nur sehr schematisch dargestellte Auswerteeinheit 42 auf, die einen Computer (nicht näher dargestellt) umfasst und mit jedem Bildsensor 30 bzw. 30' über einen Signalübertragungsweg 62 bzw. 62'verbunden ist. Die Auswerteeinheit 42 ist dazu eingerichtet ist, auf der Grundlage der Y1-Werte und Y2-Werte bzw. der Y1- Koordinaten und Y2-Koordinaten der Positionen der virtuellen Bilder 38 bzw. 38' auf den Sensorflächen 32 bzw. 32', die in wenigstens fünf unterschiedlichen Drehstellungen einer der beiden durch die Kupplung 54 miteinander verbundenen Wellen 14, 18 um die Drehachsen 12, 16 der Wellen 14, 18 erfasst wurden, und auf der Grundlage der Drehwinkel α bzw. der Drehwinkel-Werte dieser Drehstellungen (vgl. auch die schematische Draufsicht auf die erste Welle 14, die den Drehwinkel α veranschaulicht, der sich von einer vorgegebenen Referenz-Drehstellung 64 bemisst), die z.B. durch ein Inklinometer gemessen worden sind, die relative Verlagerung der beiden Wellen 14, 18 zueinander zu ermitteln und hieraus insbesondere eine eventuelle Abweichung von einer nicht fluchtenden Ausrichtung (in der sehr schematischen Darstellung nach Fig. 1 nicht veranschaulicht) der beiden Wellen 14, 18 zu bestimmen. Da bei dieser Auswerteeinheit 42 auch die Drehwinkel zur Bestimmung der Drehachsenlage herangezogen werden spielen die X1-Koordinaten und X2-Koordinaten keine Rolle bzw. sind für die Bestimmung der Verlagerung nicht erforderlich.

Bei einem Verfahren zum Ermitteln der relativen Verlagerung der beiden Wellen 14, 18 zueinander sind die folgenden Schritte vorgesehen:
(A) Bereitstellen des Systems 10 nach Fig. 1,
(B) Drehfestes Anbringen der ersten Kamera 20 an der ersten Welle 14 und der zweiten Leuchte 26 an der zweiten Welle 18, wobei die erste Kamera 20 und die zweite Leuchte 26 derart drehfest angebracht werden, dass durch das Objektiv 28 der ersten Kamera 20 virtuelle Bilder 38' der Lichtquellen 34' der zweiten Leuchte 26 auf der Sensorfläche 32 des Bildsensors 30 der ersten Kamera 20 abbildbar sind, und
(C) Drehfestes Anbringen der zweiten Kamera 22 an der zweiten Welle 18 und der ersten Leuchte 24 an dem ersten Körper 14, wobei die zweite Kamera 22 und die erste Leuchte 24 derart drehfest angebracht werden, dass durch das Objektiv 28' der zweiten Kamera 22 virtuelle Bilder 38 der Lichtquellen 34 der ersten Leuchte 24 auf der Sensorfläche 32' des Bildsensors 30' der zweiten Kamera 22 abbildbar sind,
(D) Aktivieren sowohl der ersten als auch der zweiten Leuchte 24, 26,
(E) Erfassen der Koordinaten der Positionen der virtuellen Bilder 38, 38' der Lichtquellen 34, 34' der Leuchten 24, 26 auf den Sensorflächen 32, 32' und
(F) Ermitteln der relativen Verlagerung der beiden Wellen (14, 18) zueinander.

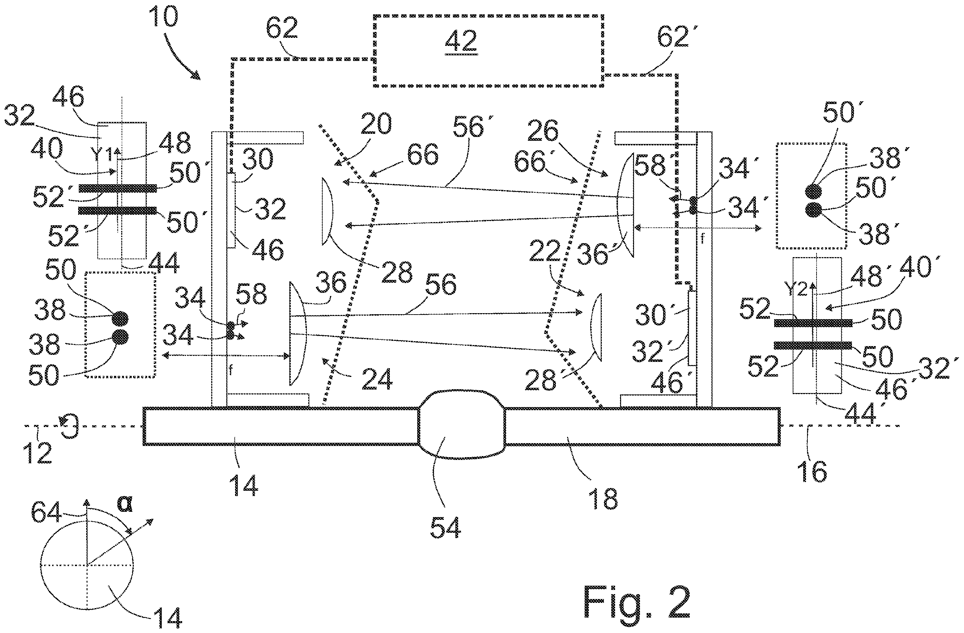

Das System 10 nach Fig. 2 unterscheidet sich von dem System nach Fig.1 dadurch, dass jeder Bildsensor 30, 30' einen Zeilensensor 46, 46' umfasst, wobei die Sensorfläche 32, 32' jedes Zeilensensors 46, 46' ein eindimensionales Koordinatensystem 40, 40' mit einer zu der Längsachse 44, 44' des Zeilensensors 46, 46' parallelen Koordinatenachse 48, 48' (hier Y1-Koordinatenachse und Y2-Koordinatenachse) aufweist. Ferner weist bei dem System 10 nach Fig. 2 sowohl das Objektiv 28 der ersten Kamera 20 als auch das Objektiv 28' der zweiten Kamera 22 einen Astigmatismus auf, der ein virtuelles Bild 38 bzw. 38' der jeweiligen Lichtquelle 34, 34' in Form eines scheibenförmigen bzw. kreisscheibenförmigen bzw. nahezu punktförmigen Lichtflecks 50 bzw. 50' erzeugen kann. Auf jeder Sensorfläche 32, 32' ist ein Abschnitt 52, 52' der Brennlinie 50, 50' abbildbar, die jeweils rechtwinkelig zu jeder der zueinander parallelen Koordinatenachsen 48, 48' orientiert ist. Die Auswerteeinheit 42 des Systems 10 nach Fig. 2 ist dazu eingerichtet, zum Ermitteln der Lage der Drehachsen 12, 16 zueinander als Koordinaten die Y1-Koordinaten und Y2-Koordinaten der abgebildeten Abschnitte 52, 52' der Brennlinien 50, 50' in den unterschiedlichen Drehstellungen zu verwenden.

Bei einem Verfahren zum Ermitteln der relativen Verlagerung der beiden Wellen 14, 18 zueinander gemäß den obigen Schritten mittels des Systems nach Fig. 2 werden in Schritt E die Y1-Koordinaten und Y2-Koordinaten der durch den abgebildeten Abschnitt 52, 52' der Brennlinie 50, 50' festgelegen Positionen der virtuellen Bilder 38, 38' der Lichtquellen 34, 34' erfasst, also die Y1-Koordinaten und Y2-Koordinaten der Abschnitte 52, 52'.

### Bezugszeichenliste

- 10: System
- 12: Drehachse
- 14: erster Körper
- 16: Drehachse
- 18: zweiter Körper
- 20: erste Kamera
- 22: zweite Kamera
- 24: erste Leuchte
- 26: zweite Leuchte
- 28, 28': Objektiv
- 30, 30': Bildsensor
- 32, 32': Sensorfläche
- 34, 34': Lichtquelle
- 36, 36': Linsenvorrichtung
- 38, 38': virtuelles Bild
- 40, 40': Koordinatensystem
- 42: Auswerteeinheit
- 44, 44': Längsachse
- 46, 46': Zeilensensor
- 48, 48': Koordinatenachse
- 50, 50': Brennlinie
- 52, 52': Abschnitt
- 54: Kupplung
- 56, 56': Leuchtenlicht
- 58, 58': abgestrahltes Licht
- 62, 62': Signalübertragungsweg
- 64: Referenz-Drehstellung
- 66, 66': Gehäuse

## Patentansprüche

1. System (10) zum Ermitteln der relativen Verlagerung zweier Körper zueinander (14, 18),
wobei das System (10) eine erste Kamera (20), eine zweite Kamera (22), eine erste Leuchte (24) und eine zweite Leuchte (26) umfasst,
wobei sowohl die erste Kamera (20) als auch die zweite Kamera (22) jeweils ein Objektiv (28, 28') und einen Bildsensor (30, 30') mit einer Sensorfläche (32, 32') umfasst,
wobei sowohl die erste Leuchte (24) als auch die zweite Leuchte (26) jeweils wenigstens eine Lichtquelle (34, 34') und eine Linsenvorrichtung (36, 36') mit positiver Brechkraft zum Bereitstellen eines Leuchtenlichts (56, 56') durch Umlenken von der Lichtquelle (34, 34') abgestrahlten Lichts umfasst,
wobei bei jeder der Leuchten (24, 26) der Abstand der Lichtquelle (34, 34') zu der Linsenvorrichtung (36, 36') kleiner ist als die Brennweite der Linsenvorrichtung (36, 36'),
wobei die erste Kamera (20) an einem ersten Körper (14) der beiden Körper (14, 18) und die zweite Leuchte (26) an dem zweiten Körper (18) der beiden Körper (14, 18) derart anbringbar sind, dass durch das Objektiv (28, 28') der ersten Kamera (20) ein virtuelles Bild (38, 38') der Lichtquelle (34, 34') der zweiten Leuchte(26) auf der Sensorfläche (32, 32') des Bildsensors (30, 30') der ersten Kamera (20) wenigstens teilweise abbildbar ist,
wobei die zweite Kamera (22) an dem zweiten Körper (18) und die erste Leuchte (24) an dem ersten Körper (14) derart anbringbar sind, dass durch das Objektiv (28, 28') der zweiten Kamera (22) ein virtuelles Bild (38, 38') der Lichtquelle (34, 34') der ersten Leuchte (24) auf der Sensorfläche (32, 32') des Bildsensors (30, 30') der zweiten Kamera (22) wenigstens teilweise abbildbar ist,
wobei die Sensorfläche (32, 32') des Bildsensors (30, 30') der ersten Kamera (20) als auch die Sensorfläche (32, 32') des Bildsensors (30, 30') der zweiten Kamera (32, 32') ein Koordinatensystem (40, 40') zur Positionserfassung des virtuellen Bilds (38, 38') auf der Sensorfläche (32, 32') aufweist.

2. System (10) nach Anspruch 1, **dadurch gekennzeichnet, dass** der erste Körper (14) ein drehbarer Körper (14) ist, der um eine Drehachse (12) des ersten Körpers (14) drehbar ist, und dass der zweite Körper (18) ein drehbarer Körper (18) ist, der um eine Drehachse (16) des zweiten Körpers (18) drehbar ist, wobei jedes Koordinatensystem (40, 40') ein zweidimensionales Koordinatensystem ist, und dass das System (10) eine Auswerteeinheit (42) umfasst, die dazu eingerichtet ist, auf der Grundlage der Koordinaten der Positionen der virtuellen Bilder (38, 38') auf den Sensorflächen (32, 32'), die in wenigstens fünf unterschiedlichen Drehstellungen wenigstens einer der Körper (14, 18) um die Drehachse(12, 16) oder in wenigstens drei unterschiedlichen Drehstellungen jeder der beiden Körper (14, 18) um die Drehachse (12, 16) erfasst wurden, die relative Verlagerung der beiden Körper (14, 18) zueinander zu ermitteln.

3. System (10) nach Anspruch 1, **dadurch gekennzeichnet, dass** der erste Körper (14) ein drehbarer Körper (14) ist, der um eine Drehachse (14) des ersten Körpers (14) drehbar ist, und dass der zweite Körper (18) ein drehbarer Körper (18) ist, der um eine Drehachse (16) des zweiten Körpers (18) drehbar ist, wobei das System (10) eine Auswerteeinheit (42) umfasst, die dazu eingerichtet ist, auf der Grundlage der Koordinaten der Positionen der virtuellen Bilder (38, 38') auf den Sensorflächen (32, 32'), die in wenigstens fünf unterschiedlichen Drehstellungen wenigstens einer der Körper (14, 18) um die Drehachse(12, 16) oder in wenigstens drei unterschiedlichen Drehstellungen jeder der beiden Körper (14, 18) um die Drehachse (12, 16) erfasst wurden, und auf der Grundlage der Drehwinkel dieser Drehstellungen, die relative Verlagerung der beiden Körper (14, 18) zueinander zu ermitteln.

4. System (10) nach Anspruch 1 oder 3, **dadurch gekennzeichnet, dass** jeder Bildsensor (30, 30') einen Zeilensensor (46, 46') umfasst, wobei die Sensorfläche (32, 32') jedes Zeilensensors (46, 46') ein eindimensionales Koordinatensystem (40, 40') mit einer zu der Längsachse (44, 44') des Zeilensensors (46, 46') parallelen Koordinatenachse (48, 48') aufweist,
wobei sowohl die erste Kamera (20) als auch die zweite Kamera (22) einen Astigmatismus aufweist, der ein virtuelles Bild (38, 38') der jeweiligen Lichtquelle (34, 34') mit wenigstens einer Brennlinie (50, 50') erzeugen kann, wobei auf jeder Sensorfläche (32, 32') ein Abschnitt (52, 52') der Brennlinie (50, 50') abbildbar ist, die winkelig zu der Koordinatenachse (48, 48') orientiert ist.

5. System nach Anspruch 3 und 4, **dadurch gekennzeichnet, dass** die Auswerteeinheit (42) dazu eingerichtet ist, zum Ermitteln der relativen Verlagerung der Körper zueinander als Koordinaten die Koordinaten des abgebildeten Abschnitts (52, 52') der Brennlinie (50, 50') in dem eindimensionalen Koordinatensystem (40, 40') zu verwenden.

6. System (10) nach einem der vorangehenden Ansprüche, **dadurch gekennzeichnet, dass** die Bildweite des virtuellen Bilds (38, 38') der Lichtquelle (34, 34') der ersten als auch der zweiten Leuchte (24, 26) innerhalb eines Bereichs von -400 Millimetern bis -100 Millimetern liegt.

7. Verfahren zum Ermitteln der relativen Verlagerung zweier Körper (14, 18) zueinander, wobei jeder Körper (14, 18) um eine Drehachse (12, 16) drehbar ist,
wobei das Verfahren die folgenden Schritte umfasst:
(A) Bereitstellen eines Systems (10) nach Anspruch 1, wobei die erste Kamera (20) an dem ersten Körper (14) und die zweite Leuchte (26) an dem zweiten Körper (18) drehfest anbringbar sind, wobei die zweite Kamera (22) an dem zweiten Körper (18) und die erste Leuchte (24) an dem ersten Körper (14) drehfest anbringbar sind,
(B) Drehfestes Anbringen der ersten Kamera (20) an dem ersten Körper (14) und der zweiten Leuchte (26) an dem zweiten Körper (18), wobei die erste Kamera (20) und die zweite Leuchte (26) derart drehfest angebracht werden, dass durch das Objektiv (28, 28') der ersten Kamera (20) ein virtuelles Bild (38, 38') der Lichtquelle (34, 34') der zweiten Leuchte (26) auf der Sensorfläche (32, 32') des Bildsensors (30, 30') der ersten Kamera (20) wenigstens teilweise abbildbar ist, und
(C) Drehfestes Anbringen der zweiten Kamera (22) an dem zweiten Körper (18) und der ersten Leuchte (24) an dem ersten Körper (14), wobei die zweite Kamera (22) und die erste Leuchte (24) derart drehfest angebracht werden, dass durch das Objektiv (28, 28') der zweiten Kamera (22) ein virtuelles Bild (38, 38') der Lichtquelle (34, 34') der ersten Leuchte (24) auf der Sensorfläche (32, 32') des Bildsensors (30, 30') der zweiten Kamera (22) wenigstens teilweise abbildbar ist,
(D) Aktivieren sowohl der ersten als auch der zweiten Leuchte (24, 26),
(E) Erfassen der Koordinaten der Positionen der virtuellen Bilder (38, 38') der Lichtquellen (34, 34') der Leuchten (24, 26) auf den Sensorflächen(32, 32') in wenigstens fünf unterschiedlichen Drehstellungen wenigstens eines Körpers (14, 18) um die Drehachse (12, 16) oder in wenigstens drei unterschiedlichen Drehstellungen jeder der beiden Körper (14, 18) um die Drehachse (12, 16), und
(F) Ermitteln der relativen Verlagerung der beiden Körper (14, 18) zueinander auf der Grundlage der in Schritt (E) erfassten Koordinaten oder auf der Grundlage der in Schritt (E) erfassten Koordinaten und auf der Grundlage der Drehwinkel der Drehstellungen.

8. Verfahren nach Anspruch 7, **dadurch gekennzeichnet, dass** bei dem System (10) jeder Bildsensor (30, 30') einen Zeilensensor (46, 46') umfasst, wobei die Sensorfläche (32, 32') jedes Zeilensensors (46, 46') ein eindimensionales Koordinatensystem (40, 40') mit einer zu der Längsachse (44, 44') des Zeilensensors (46, 46') parallelen Koordinatenachse (48, 48') aufweist, wobei sowohl die erste Kamera (20) als auch die zweite Kamera (22) einen Astigmatismus aufweist, der ein virtuelles Bild (38, 38') der jeweiligen Lichtquelle (34, 34') mit wenigstens einer Brennlinie (50, 50') erzeugen kann, wobei auf jeder Sensorfläche (32, 32') ein Abschnitt (52, 52') der Brennlinie (50, 50') abbildbar ist, die winkelig zu der Koordinatenachse (48, 48') orientiert ist,
wobei in Schritt (E) die Koordinaten der durch den abgebildeten Abschnitt (52, 52') der Brennlinie (50, 50') festgelegen Positionen der virtuellen Bilder (38, 38') in dem eindimensionalen Koordinatensystem (40, 40') erfasst werden, und wobei in Schritt (F) die relative Verlagerung der beiden Körper (14, 18) zueinander auf der Grundlage dieser Koordinaten und auf der Grundlage der Drehwinkel der Drehstellungen ermittelt wird.

9. Verfahren nach Anspruch 7 oder 8, **dadurch gekennzeichnet, dass** die Bildweite des virtuellen Bilds (38, 38') der Lichtquelle (34, 34') der ersten als auch der zweiten Leuchte (24, 26) innerhalb eines Bereichs von -400 Millimetern bis -100 Millimetern liegt.

## Claims

1. System (10) for determining the displacement of two bodies (14, 18) relative to each other,
wherein the system (10) comprises a first camera (20), a second camera (22), a first light (24), and a second light (26),
wherein both the first camera (20) and also the second camera (22) each comprise an objective lens (28, 28') and an image sensor (30, 30') having a sensor surface (32, 32'),
wherein both the first light (24) and also the second light (26) each comprise at least one light source (34, 34') and a lens device (36, 36') having positive refractive force for providing an illumination light (56, 56') by deflecting light emitted by the light source (34, 34'),
wherein in each of the lights (24, 26), the distance of the light source (34, 34') from the lens device (36, 36') is less than the focal length of the lens device (36, 36'),
wherein the first camera (20) is attachable to a first body (14) of the two bodies (14, 18) and the second light (26) is attachable to the second body (18) of the two bodies (14, 18) such that a virtual image (38, 38') of the light source (34, 34') of the second light (26) can be at least partially imaged on the sensor surface (32, 32') of the image sensor (30, 30') of the first camera (20) by the objective lens (28, 28') of the first camera (20),
wherein the second camera (22) is attachable to the second body (18) and the first light (24) is attachable to the first body (14) such that a virtual image (38, 38') of the light source (34, 34') of the first light (24) can be at least partially imaged on the sensor surface (32, 32') of the image sensor (30, 30') of the second camera (22) by the objective lens (28, 28') of the second camera (22),
wherein the sensor surface (32, 32') of the image sensor (30, 30') of the first camera (20) and also the sensor surface (32, 32') of the image sensor (30, 30') of the second camera (32, 32') have a coordinate system (40, 40') for the position detection of the virtual image (38, 38') on the sensor surface (32, 32').

2. System (10) according to Claim 1, **characterized in that** the first body (14) is a rotatable body (14), which is rotatable about a rotational axis (12) of the first body (14), and the second body (18) is a rotatable body (18), which is rotatable about a rotational axis (16) of the second body (18), wherein each coordinate system (40, 40') is a two-dimensional coordinate system, and the system (10) comprises an analysis unit (42), which is configured to determine the displacement of the two bodies (14, 18) relative to each other on the basis of the coordinates of the positions of the virtual images (38, 38') on the sensor surfaces (32, 32'), which were detected in at least five different rotational positions of at least one of the bodies (14, 18) about the rotational axis (12, 16) or in at least three different rotational positions of each of the two bodies (14, 18) about the rotational axis (12, 16).

3. System (10) according to Claim 1, **characterized in that** the first body (14) is a rotatable body (14), which is rotatable about a rotational axis (14) of the first body (14), and the second body (18) is a rotatable body (18), which is rotatable about a rotational axis (16) of the second body (18), wherein the system (10) comprises an analysis unit (42), which is configured to determine the displacement of the two bodies (14, 18) relative to each other on the basis of the coordinates of the positions of the virtual images (38, 38') on the sensor surfaces (32, 32'), which were detected in at least five different rotational positions of at least one of the bodies (14, 18) about the rotational axis (12, 16) or in at least three different rotational positions of each of the two bodies (14, 18) about the rotational axis (12, 16), and on the basis of the rotational angles of these rotational positions.

4. System (10) according to Claim 1 or 3, **characterized in that** each image sensor (30, 30') comprises a line sensor (46, 46'), wherein the sensor surface (32, 32') of each line sensor (46, 46') has a one-dimensional coordinate system (40, 40') having a coordinate axis (48, 48') parallel to the longitudinal axis (44, 44') of the line sensor (46, 46'),
wherein both the first camera (20) and also the second camera (22) has an astigmatism, which can generate a virtual image (38, 38') of the respective light source (34, 34') having at least one focal line (50, 50'), wherein a section (52, 52') of the focal line (50, 50'), which is oriented at an angle to the coordinate axis (48, 48'), can be imaged on each sensor surface (32, 32').

5. System according to Claims 3 and 4, **characterized in that** the analysis unit (42) is configured to use the coordinates of the imaged section (52, 52') of the focal line (50, 50') in the one-dimensional coordinate system (40, 40') to determine the displacement of the bodies relative to each other as coordinates.

6. System (10) according to any one of the preceding claims, **characterized in that** the image distance of the virtual image (38, 38') of the light source (34, 34') of the first and also the second light (24, 26) is within a range of -400 mm to -100 mm.

7. Method for determining the displacement of two bodies (14, 18) relative to each other, wherein each body (14, 18) is rotatable about a rotational axis (12, 16),
wherein the method comprises the following steps:
(A) providing a system (10) according to Claim 1, wherein the first camera (20) is attachable in a rotationally-fixed manner to the first body (14) and the second light (26) is attachable in a rotationally-fixed manner to the second body (18), wherein the second camera (22) is attachable in a rotationally-fixed manner to the second body (18) and the first light (24) is attachable in a rotationally-fixed manner to the first body (14),
(B) rotationally-fixed attachment of the first camera (20) to the first body (14) and the second light (26) to the second body (18), wherein the first camera (20) and the second light (26) are attached in a rotationally-fixed manner such that a virtual image (38, 38') of the light source (34, 34') of the second light (26) can be imaged on the sensor surface (32, 32') of the image sensor (30, 30') of the first camera (20) at least partially by the objective lens (28, 28') of the first camera (20), and
(C) rotationally-fixed attachment of the second camera (22) to the second body (18) and the first light (24) to the first body (14), wherein the second camera (22) and the first light (24) are attached in a rotationally-fixed manner such that a virtual image (38, 38') of the light source (34, 34') of the first light (24) can be imaged on the sensor surface (32, 32') of the image sensor (30, 30') of the second camera (22) at least partially by the objective lens (28, 28') of the second camera (22),
(D) activating both the first and also the second light (24, 26),
(E) detecting the coordinates of the positions of the virtual images (38, 38') of the light sources (34, 34') of the lights (24, 26) on the sensor surfaces (32, 32') in at least five different rotational positions of at least one body (14, 18) about the rotational axis (12, 16) or in at least three different rotational positions of each of the two bodies (14, 18) about the rotational axis (12, 16), and
(F) determining the displacement of the two bodies (14, 18) relative to each other on the basis of the coordinates detected in step (E) or on the basis of the coordinates detected in step (E) and on the basis of the rotational angles of the rotational positions.

8. Method according to Claim 7, **characterized in that** in the system (10), each image sensor (30, 30') comprises a line sensor (46, 46'), wherein the sensor surface (32, 32') of each line sensor (46, 46') has a one-dimensional coordinate system (40, 40') having a coordinate axis (48, 48') parallel to the longitudinal axis (44, 44') of the line sensor (46, 46'), wherein both the first camera (20) and also the second camera (22) has an astigmatism, which can generate a virtual image (38, 38') of the respective light source (34, 34') having at least one focal line (50, 50'), wherein a section (52, 52') of the focal line (50, 50'), which is oriented at an angle to the coordinate axis (48, 48'), can be imaged on each sensor surface (32, 32'),
wherein in step (E), the coordinates of the positions of the virtual images (38, 38') in the one-dimensional coordinate system (40, 40') determined by the imaged section (52, 52') of the focal line (50, 50') are detected, and wherein in step (F), the displacement of the two bodies (14, 18) relative to each other is determined on the basis of these coordinates and on the basis of the rotational angles of the rotational positions.

9. Method according to Claim 7 or 8, **characterized in that** the image distance of the virtual image (38, 38') of the light source (34, 34') of the first and also the second light (24, 26) is within a range of -400 mm to - 100 mm.

## Revendications

1. Système (10) de détermination du décalage relatif de deux corps l'un par rapport à l'autre (14, 18),
le système (10) comportant une première caméra (20), une deuxième caméra (22), une première lampe (24) et une deuxième lampe (26),
la première caméra (20) et la deuxième caméra (22) comportant respectivement un objectif (28, 28') et un capteur d'image (30, 30') pourvu d'une surface de détection (32, 32'),
la première lampe (24) et la deuxième lampe (26) comportant respectivement au moins une source de lumière (34, 34') et un arrangement des lentilles (36, 36') ayant un pouvoir réfringent positif servant à fournir une lumière d'éclairage (56, 56') par déviation de la lumière émise par la source de lumière (34, 34'),
sur chacune des lampes (24, 26), l'écart entre la source de lumière (34, 34') et l'arrangement des lentilles (36, 36') étant inférieur à la distance focale de l'arrangement des lentilles (36, 36'),
la première caméra (20) pouvant être montée sur un premier corps (14) des deux corps (14, 18) et la deuxième lampe (26) sur le deuxième corps (18) des deux corps (14, 18) de telle sorte qu'une image virtuelle (38, 38') de la source de lumière (34, 34') de la deuxième lampe (26) peut être représentée au moins partiellement à travers l'objectif (28, 28') de la première caméra (20) sur la surface de détection (32, 32') du capteur d'image (30, 30') de la première caméra (20),
la deuxième caméra (22) pouvant être montée sur le deuxième corps (18) et la première lampe (24) sur le premier corps (14) de telle sorte qu'une image virtuelle (38, 38') de la source de lumière (34, 34') de la première lampe (24) peut être représentée au moins partiellement à travers l'objectif (28, 28') de la deuxième caméra (22) sur la surface de détection (32, 32') du capteur d'image (30, 30') de la deuxième caméra (22),
la surface de détection (32, 32') du capteur d'image (30, 30') de la première caméra (20) ainsi que la surface de détection (32, 32') du capteur d'image (30, 30') de la deuxième caméra (32, 32') possédant un système de coordonnées (40, 40') destiné à la détection de position de l'image virtuelle (38, 38') sur la surface de détection (32, 32').

2. Système (10) selon la revendication 1, **caractérisé en ce que** le premier corps (14) est un corps (14) rotatif qui peut tourner autour d'un axe de rotation (12) du premier corps (14), et **en ce que** le deuxième corps (18) est un corps (18) rotatif qui peut tourner autour d'un axe de rotation (16) du deuxième corps (18), chaque système de coordonnées (40, 40') étant un système de coordonnées bidimensionnel, et **en ce que** le système (10) comporte une unité d'interprétation (42) qui est conçue pour déterminer le décalage relatif des deux corps (14, 18) l'un par rapport à l'autre en se basant sur les coordonnées des positions des images virtuelles (38, 38') sur les surfaces de détection (32, 32'), lesquelles ont été acquises dans au moins cinq positions de rotation différentes d'au moins l'un des corps (14, 18) autour de l'axe de rotation (12, 16) ou dans au moins trois positions de rotation différentes de chacun des deux corps (14, 18) autour de l'axe de rotation (12, 16).

3. Système (10) selon la revendication 1, **caractérisé en ce que** le premier corps (14) est un corps (14) rotatif qui peut tourner autour d'un axe de rotation (14) du premier corps (14), et **en ce que** le deuxième corps (18) est un corps (18) rotatif qui peut tourner autour d'un axe de rotation (16) du deuxième corps (18), le système (10) comportant une unité d'interprétation (42) qui est conçue pour déterminer le décalage relatif des deux corps (14, 18) l'un par rapport à l'autre en se basant sur les coordonnées des positions des images virtuelles (38, 38') sur les surfaces de détection (32, 32'), lesquelles ont été acquises dans au moins cinq positions de rotation différentes d'au moins l'un des corps (14, 18) autour de l'axe de rotation (12, 16) ou dans au moins trois positions de rotation différentes de chacun des deux corps (14, 18) autour de l'axe de rotation (12, 16), et en se basant sur l'angle de rotation de ces positions de rotation.

4. Système (10) selon la revendication 1 ou 3, **caractérisé en ce que** chaque capteur d'image (30, 30') comporte un capteur linéaire (46, 46'), la surface de détection (32, 32') de chaque capteur linéaire (46, 46') possédant un système de coordonnées unidimensionnel (40, 40') avec un axe de coordonnées (48, 48') parallèle à l'axe longitudinal (44, 44') du capteur linéaire (46, 46'),
la première caméra (20) ainsi que la deuxième caméra (22) présentant un astigmatisme qui peut générer une image virtuelle (38, 38') de la source de lumière (34, 34') respective avec au moins une ligne focale (50, 50'), une portion (52, 52') de la ligne focale (50, 50') qui est orientée sous un angle donné par rapport à l'axe de coordonnées (48, 48') pouvant être représentée sur chaque surface de détection (32, 32').

5. Système selon les revendications 3 et 4, **caractérisé en ce que** l'unité d'interprétation (42) est conçue pour utiliser comme coordonnées, en vue de déterminer le décalage relatif des corps l'un par rapport à l'autre, les coordonnées de la portion (52, 52') représentée de la ligne focale (50, 50') dans un système de coordonnées unidimensionnel (40, 40').

6. Système (10) selon l'une des revendications précédentes, **caractérisé en ce que** la largeur d'image de l'image virtuelle (38, 38') de la source de lumière (34, 34') de la première ainsi que de la deuxième lampe (24, 26) est incluse dans une plage de -400 millimètres à - 100 millimètres.

7. Procédé de détermination du décalage relatif de deux corps (14, 18) l'un par rapport à l'autre, chaque corps (14, 18) pouvant tourner autour d'un axe de rotation (12, 16),
le procédé comprenant les étapes suivantes :
(A) fourniture d'un système (10) selon la revendication 1, la première caméra (20) pouvant être montée en rotation solidaire sur le premier corps (14) et la deuxième lampe (26) sur le deuxième corps (18), la deuxième caméra (22) pouvant être montée en rotation solidaire sur le deuxième corps (18) et la première lampe (24) sur le premier corps (14),
(B) montage en rotation solidaire de la première caméra (20) sur le premier corps (14) et de la deuxième lampe (26) sur le deuxième corps (18), la première caméra (20) et la deuxième lampe (26) étant montées en rotation solidaire de telle sorte qu'une image virtuelle (38, 38') de la source de lumière (34, 34') de la deuxième lampe (26) peut être représentée au moins partiellement à travers l'objectif (28, 28') de la première caméra (20) sur la surface de détection (32, 32') du capteur d'image (30, 30') de la première caméra (20), et
(C) montage en rotation solidaire de la deuxième caméra (22) sur le deuxième corps (18) et de la première lampe (24) sur le premier corps (14), la deuxième caméra (22) et la première lampe (24) étant montées en rotation solidaire de telle sorte qu'une image virtuelle (38, 38') de la source de lumière (34, 34') de la première lampe (24) peut être représentée au moins partiellement à travers l'objectif (28, 28') de la deuxième caméra (22) sur la surface de détection (32, 32') du capteur d'image (30, 30') de la deuxième caméra (22),
(D) activation à la fois de la première et de la deuxième lampe (24, 26),
(E) détection des coordonnées des positions des images virtuelles (38, 38') des sources de lumière (34, 34') des lampes (24, 26) sur les surfaces de détection (32, 32') dans au moins cinq positions de rotation différentes d'au moins un corps (14, 18) autour de l'axe de rotation (12, 16) ou dans au moins trois positions de rotation différentes de chacun des deux corps (14, 18) autour de l'axe de rotation (12, 16), et
(F) détermination du décalage relatif des deux corps (14, 18) l'un par rapport à l'autre en se basant sur les coordonnées détectées à l'étape (E) ou en se basant sur les coordonnées détectées à l'étape (E) et en se basant sur l'angle de rotation des positions de rotation.

8. Procédé selon la revendication 7, **caractérisé en ce que** sur le système (10) chaque capteur d'image (30, 30') comporte un capteur linéaire (46, 46'), les surfaces de détection (32, 32') de chaque capteur linéaire (46, 46') possédant un système de coordonnées unidimensionnel (40, 40') avec un axe de coordonnées (48, 48') parallèle à l'axe longitudinal (44, 44') du capteur linéaire (46, 46'), la première caméra (20) ainsi que la deuxième caméra (22) présentant un astigmatisme qui peut générer une image virtuelle (38, 38') de la source de lumière (34, 34') respective avec au moins une ligne focale (50, 50'), une portion (52, 52') de la ligne focale (50, 50') qui est orientée sous un angle donné par rapport à l'axe de coordonnées (48, 48') pouvant être représentée sur chaque surface de détection (32, 32'),
les coordonnées des positions des images virtuelles (38, 38') dans le système de coordonnées unidimensionnel (40, 40'), définies par la portion (52, 52') représentée de la ligne focale (50, 50'), étant détectées à l'étape (E), et le décalage relatif des deux corps (14, 18) l'un par rapport à l'autre étant déterminé à l'étape (F) en se basant sur ces coordonnées et en se basant sur l'angle de rotation des positions de rotation.

9. Procédé selon la revendication 7 ou 8, **caractérisé en ce que** la largeur d'image de l'image virtuelle (38, 38') de la source de lumière (34, 34') de la première ainsi que de la deuxième lampe (24, 26) est incluse dans une plage de -400 millimètres à - 100 millimètres.
